# EUROPÄISCHE PATENTANMELDUNG

(11) **EP 3 698 906 A1**
(43) Veröffentlichungstag der Anmeldung: **26.08.2020**
(21) Anmeldenummer: 20157964.6
(22) Anmeldetag: 18.02.2020
(51) Int. Cl.: B23B 29/20, B23B 29/04

(54) **WERKZEUGTRÄGER UND WERKZEUGHALTER**

(30) Priorität: 25.02.2019 DE 102019104686
(71) Anmelder: Index-Werke GmbH & Co. KG Hahn & Tessky, 73730 Esslingen (DE)
(72) Erfinder: Schumacher, Karl-Heinz, 72760 Reutlingen (DE)
(74) Vertreter: Hoeger, Stellrecht & Partner Patentanwälte mbB

(57) **Zusammenfassung**

Werkzeugträger (30) einer Werkzeugmaschine, umfassend einen Werkzeughalterträger (62) mit einer sich in den Werkzeughalterträger (62) hinein erstreckenden Aufnahme (64), in welche ein Fixierkörper (72) eines Werkzeughalters (32) durch Bewegen desselben in einer Einsteckrichtung (74) einsteckbar und in einem eingesteckten Zustand durch Fixierung desselben in der Aufnahme (64) durch ein Formschlusselement (118) festlegbar ist, derart zu verbessern, dass die Fixierung des Fixierkörpers (72) möglichst einfach und schnell durchführbar ist, wird vorgeschlagen, dass das Formschlusselement ein Fixierkeilkörper (118) ist, der in dem Werkzeughalterträger in einer quer zur Einsteckrichtung (74) verlaufenden Bewegungsrichtung zwischen einer Freigabestellung und einer Fixierstellung bewegbar ist und dass der Fixierkeilkörper (118) in der Fixierstellung mit einer Keilaufnahme (112, 114) des Fixierkörpers (72) zusammenwirkt.

## Beschreibung

Die Erfindung betrifft einen Werkzeugträger einer Werkzeugmaschine, umfassend einen Werkzeughalterträger mit einer sich in den Werkzeughalterträger hineinerstreckenden Aufnahme, in welche ein Fixierkörper eines Werkzeughalters durch Bewegen desselben in einer Einsteckrichtung einsteckbar und in einem eingesteckten Zustand durch Fixierung desselben in der Aufnahme durch ein Formschlusselement festlegbar ist.

Derartige Werkzeugträger sind aus dem Stand der Technik bekannt.

Bei diesen besteht jedoch das Problem, dass die Fixierung des Fixierkörpers durch das Formschlusselement ein aufwändiger Vorgang ist.

Der Erfindung liegt daher die Aufgabe zugrunde, ein Werkzeugträger der eingangs beschriebenen Art derart zu verbessern, dass die Fixierung des Fixierkörpers möglichst einfach und schnell durchführbar ist.

Diese Aufgabe wird bei einem Werkzeugträger der eingangs beschriebenen Art erfindungsgemäß dadurch gelöst, dass das Formschlusselement ein Fixierkeilkörper ist, der in dem Werkzeughalterträger in einer quer zur Einsteckrichtung verlaufenden Bewegungsrichtung zwischen einer Freigabestellung und einer Fixierstellung bewegbar ist und dass der Fixierkeilkörper in der Fixierstellung mit einer Keilaufnahme des Fixierkörpers zusammenwirkt, um diesen zu fixieren.

Der Vorteil der erfindungsgemäßen Lösung ist darin zu sehen, dass ein derartiger Fixierkeilkörper sich in einfacher Weise bewegen lässt und somit die Möglichkeit eröffnet, durch einfaches Bewegen desselben zwischen der Freigabestellung und der Fixierstellung und Zusammenwirken mit der Keilaufnahme des Fixierkörpers in der Fixierstellung den Fixierkörper in der Aufnahme festzulegen oder zu lösen, wobei sich dabei mit einem Keilkörper große Kräfte zum Fixieren des Fixierkörpers erzeugen lassen.

Prinzipiell könnte der Fixierkeilkörper auf einer Kurvenbahn zwischen der Freigabestellung und der Fixierstellung bewegbar sein.

Eine besonders einfache Bedienungsmöglichkeit sieht jedoch vor, dass der Fixierkeilkörper in dem Werkzeughalterträger linear bewegbar ist und mit einer Fixierkeilfläche auf eine Keilfläche der Keilaufnahme des Fixierkörpers wirkt.

Hinsichtlich der Führung des Fixierkeilkörpers wurden ebenfalls keine näheren Angaben gemacht.

Eine vorteilhafte Lösung sieht vor, dass der Fixierkeilkörper in einem Führungskanal des Werkzeughalterträgers bewegbar geführt ist.

Der Führungskanal kann grundsätzlich in dem Werkzeughalterträger in unterschiedlichen Richtungen verlaufen.

Eine besonders vorteilhafte Lösung sieht vor, dass der Führungskanal in die Aufnahme quer zur Einsteckrichtung eindringt, vorzugsweise diese quer zur Einsteckrichtung durchsetzt und somit in einfacher Weise die Möglichkeit eröffnet, den in diesem geführten Fixierkeilkörper zwischen der Fixierstellung und der Freigabestellung zu bewegen.

Hinsichtlich der Ausbildung des Fixierkeilkörpers, insbesondere der Abstützung desselben wurden bislang keine näheren Angaben gemacht.

So sieht eine vorteilhafte Lösung vor, dass der Fixierkeilkörper auf einer der Fixierkeilfläche gegenüberliegenden Seite eine Abstützfläche aufweist, mit welcher dieser zumindest in der Fixierstellung in dem Führungskanal abgestützt geführt ist.

Eine besonders günstige Lösung sieht vor, dass der Fixierkeilkörper in der Fixierstellung beiderseits der Aufnahme in dem Führungskanal mit seiner Abstützfläche abgestützt ist, wobei insbesondere in diesem Fall der Führungskanal die Aufnahme quer zur Einsteckrichtung durchdringt.

Diese Lösung hat den großen Vorteil, dass in diesem Fall die auf den Fixierkörper wirkende Fixierkeilfläche des Fixierkeilkörpers in der Fixierstellung zwischen den Stellen liegt, an welchen der Fixierkeilkörper beiderseits der Aufnahme an dem Führungskanal abgestützt ist, so dass der Fixierkeilkörper in der Lage ist, große Kräfte aufzunehmen und mit großen Spannkräften auf den Fixierkörper zu wirken, da diese Kräfte von dem Fixierkörper beiderseits der Aufnahme auf den Führungskanal und somit auf den Werkzeughalterträger übertragen werden können.

Eine weitere Vorteilhafte Lösung sieht vor, dass die Fixierkeilfläche des Fixierkeilkörpers in einer Ebene verläuft, die in einen spitzen Winkel mit einer Führungsrichtung des in dem Führungskanal bewegbaren Fixierkeilkörpers einschließt, so dass die Fixierkeilfläche bei Verschieben des Fixierkeilkörpers in der Führungsrichtung schräg zur Führungsrichtung verläuft und somit in einfacher Weise auf den Fixierkörper, insbesondere die Keilfläche des Fixierkörpers einwirken kann und in der Fixierstellung mit großen Kräften auf den Fixierkörper einwirken kann.

Im Zusammenhang mit der bisherigen Beschreibung der erfindungsgemäßen Lösung wurde nicht näher darauf eingegangen, wie der Fixierkeilkörper zwischen der Fixierstellung und der Freigabestellung bewegt werden soll und wie der Fixierkeilkörper in der Fixierstellung und der Freigabestellung definiert positioniert werden soll.

Eine vorteilhafte Lösung sieht dabei vor, dass der Fixierkeilkörper durch eine Positioniereinheit zwischen der Fixierstellung und der Freigabestellung bewegbar ist und mittels der Positioniereinheit sowohl in der Fixierstellung als auch der Freigabestellung positionierbar ist.

Prinzipiell könnte dabei die Positioniereinheit unmittelbar neben der Aufnahme angeordnet sein.

Um ausreichend Bauraum zu erhalten ist vorzugsweise vorgesehen, dass die Positioniereinheit auf einer einer werkstückzugewandten Frontseite des Werkzeughalterträgers abgewandten Seite am Werkzeughalterträger angeordnet ist.

Hinsichtlich der Betätigung und Ausbildung der Positioniereinheit selbst wurden bislang keine näheren Angaben gemacht.

Prinzipiell ist eine hydraulisch oder motorisch betriebene Positioniereinheit möglich.

Eine besonders einfache und zweckmäßige Lösung sieht vor, dass die Positioniereinheit zum Bewegen des Fixierkeilkörpers zwischen der Fixierstellung und der Freigabestellung und zum Festlegen des Fixierkörpers in der Fixierstellung manuell betätigbar ist.

So sieht eine insbesondere manuell einfach betätigbare Lösung vor, dass die Positioniereinheit eine Bajonettstruktur aufweist, mittels welcher der Fixierkeilkörper sowohl in der Fixierstellung als auch in der Freigabestellung positionierbar ist.

Der Vorteil dieser Lösung ist der, dass eine Bajonettstruktur die Möglichkeit eröffnet, zwei in einer Verschieberichtung im Abstand voneinander angeordnete Stellungen eindeutig zu definieren, wobei eine der Fixierstellung und eine der Freigabestellung zugeordnet wird, so dass der Fixierkeilkörper einerseits in diesen Positionen festlegbar ist und andererseits in einfacher Weise zwischen diesen Positionen verschiebbar ist, um schnell von der Fixierstellung in die Freigabestellung oder der Freigabestellung in die Fixierstellung zu wechseln.

Vorzugsweise ist die Positioniereinheit so ausgebildet, dass sie einen Flanschkörper mit Bajonettflanschen aufweist, die mit einer Bajonettkontur einer Führungshülse zusammenwirken.

Insbesondere ist dabei die Bajonettkontur so ausgebildet, dass sie zwei in einer Verschieberichtung im Abstand voneinander und um eine zur Verschieberichtung parallele Achse um einem Winkel verdreht zueinander angeordnete Stützflächen aufweist, wobei diese beiden Stützflächen dazu dienen, definierte Positionen für die Freigabestellung und im Wesentlichen auch die Fixierstellung vorzugeben.

Des Weiteren ist vorteilhafterweise vorgesehen, dass der Flanschkörper mit den Bajonettflanschen mit einem Zentrierkörper verbunden ist, welcher in der Führungshülse in der Verschieberichtung verschiebbar geführt ist.

Vorzugsweise erfolgt in diesem Fall eine Kopplung zwischen dem Zentrierkörper und dem Fixierkeilkörper so, dass durch Verschieben des Zentrierkörpers in der Führungshülse ein Verschieben des Fixierkeilkörpers erfolgt und durch das jeweilige Festlegen des Zentrierkörpers mit den Bajonettflanschen der Bajonettstruktur ein Positionieren des Fixierkeilkörpers sowohl in der Freigabestellung als auch in einer Ausgangsstellung für die Fixierstellung erfolgen kann.

Prinzipiell wäre es denkbar, den Zentrierkörper und den Fixierkeilkörper starr miteinander zu verbinden.

Bei dieser Lösung bestünde jedoch das Problem, dass der Fixierkeilkörper in der Fixierstellung nicht mit einer Spannkraft auf den Fixierkörper wirken könnte.

Aus diesem Grund sieht eine vorteilhafte Lösung vor, dass der Fixierkeilkörper einstellbar mit der Positioniereinheit, insbesondere mit dem Zentrierkörper der Positioniereinheit, gekoppelt ist.

Damit besteht die Möglichkeit, mit der Positioniereinheit den Fixierkeilkörper in der Freigabestellung und der Ausgangsstellung für die Fixierstellung mittels der Bajonettstruktur zu positionieren, jedoch noch zumindest in der Fixierstellung den Fixierkeilkörper relativ zu den durch die Positioniereinheit vorgegebenen Positionen verstellen zu können.

Eine besonders vorteilhafte Lösung sieht vor, dass der Zentrierkörper mittels einer mit dem Zentrierkörper verschraubten Einstellschraube mit dem Fixierkeilkörper gekoppelt ist.

Insbesondere ist dabei die Einstellschraube in den Zentrierkörper eingeschraubt.

Eine derartige Einstellschraube ermöglicht es somit zumindest in der Fixierstellung noch eine Relativpositionierung des Fixierkeilkörpers relativ zu einer durch die Bajonettflansche und die eine Stützfläche vorgegebenen Ausgangsstellung durchzuführen.

Damit erlaubt die Positioniereinheit beispielsweise eine derartige Verstellung des Fixierkörpers, dass dieser zunächst ohne nennenswerten Kraftaufwand von der Freigabestellung in die Ausgangsstellung für die Fixierstellung bewegt werden kann, in welcher der Fixierkeilkörper noch nicht spielfrei mit dem Fixierkörper zusammenwirkt.

Durch die Einstellschraube ist nun bei Erreichen der durch den Bajonettflansch und die Stützfläche der Bajonettkontur definierten Ausgangsstellung für die Fixierstellung die Möglichkeit geschaffen, den Fixierkeilkörper noch so weit zu bewegen, bis dieser auf den Fixierkörper des Werkzeughalters mit einer Kraft, die eine Komponente in der Einsteckrichtung aufweist, einwirkt, um den Fixierkörper in eine definierte Endposition in der Aufnahme zu bewegen und kraftbeaufschlagt zu halten.

Eine besonders günstige Lösung sieht vor, dass der Werkzeughalterträger eine Auflageseite aufweist, auf welcher der Werkzeughalter auflegbar, insbesondere abstützbar ist, um dem Werkzeughalter mit dem Werkzeughalterträger mit der notwendigen Stabilität zu verbinden.

Besonders günstig ist es dabei, wenn der Werkzeughalterträger an der Auflageseite mit ersten Formschlusselementen versehen ist, welche sich insbesondere quer zu einer Vorschubrichtung des Werkzeughalterträger erstrecken.

Derartige Formschlusselemente haben den Vorteil, dass diese in der Lage sind, Kräfte in Vorschubrichtung aufzunehmen.

Insbesondere sieht eine derartige Lösung vor, dass sich die Aufnahme ausgehend von der Auflageseite in den Werkzeughalterkörper hineinerstreckt, so dass bei Beaufschlagen des Fixierkörpers in der Aufnahme durch den Fixierkeilkörper der Werkzeughalter kraftbeaufschlagt an der Auflageseite in Anlage gehalten werden kann und somit auch die Formschlusselemente kraftbeaufschlagt mit dem Werkzeughalter zusammenwirken können.

Darüber hinaus betrifft die Erfindung einen Werkzeughalter zur Fixierung an einem Werkzeugträger insbesondere gemäß einem oder mehreren der voranstehenden Merkmale, wobei der Werkzeughalter einen Fixierkörper aufweist, welcher in die Aufnahme des Werkzeugträgers einsetzbar ist.

Dabei kann der Fixierkörper in unterschiedlichster Art und Weise ausgebildet sein.

Insbesondere ist dabei vorgesehen, dass der Fixierkörper als Keilaufnahme einen Durchbruch aufweist, in welchem eine Keilfläche vorgesehen ist, welche durch einen Fixierkeilkörper des Werkzeugträgers mit einer Fixierkeilfläche in der Fixierstellung beaufschlagt ist, um den Werkzeughalter an dem Werkzeugträger zu fixieren.

Darüber hinaus ist vorzugsweise vorgesehen, dass der Werkzeughalter einen Abstützkörper aufweist, welcher mit einer Abstützfläche auf der Auflageseite des Werkzeughalterträgers auflegbar ist.

Besonders günstig ist es, wenn der Fixierkörper sich ausgehend von der Abstützseite des Abstützkörpers vom Abstützkörper weg erstreckt, um in einfacher Weise mit der Aufnahme in Eingriff gebracht werden zu können. Eine weitere günstige Lösung sieht vor, dass der Abstützkörper an der Abstützseite mit zweiten Formschlusselementen versehen ist, welche mit ersten Formschlusselementen des Werkzeughalterträgers bei auf dem Werkzeughalterträger fixiertem Werkzeughalter in Eingriff stehen, wobei diese Formschlusselemente insbesondere dazu dienen, die bei einer Bearbeitung eines Werkstücks auf das Werkzeug und somit den Werkzeughalter wirkenden und auf den Werkzeughalterträger zu übertragenden Kräfte aufzunehmen, so dass diese Kräfte nicht über den Fixierkörper und die Aufnahme auf den Werkzeughalterträger übertragen werden.

Hinsichtlich der aufzunehmenden Kräfte ist es besonders günstig, wenn die zweiten Formschlusselemente im Zusammenwirken mit den ersten Formschlusselementen den Werkzeughalter relativ zum Werkzeughalterträger in einer Vorschubrichtung, insbesondere in der X-Vorschubrichtung des Werkzeugträgers exakt positionieren, denn eine exakte Positionierung in der X-Vorschubrichtung ist bei einer Werkzeugmaschine, insbesondere einer Drehmaschine entscheidend für die Genauigkeit der Bearbeitung.

Um eine möglichst große Kräfte bei der Fixierstellung aufnehmende Konstruktion zu erhalten ist vorteilhafterweise vorgesehen, dass der Fixierkörper in Richtung quer zu einer Bewegungsrichtung des Fixierkeilkörpers eine größere Ausdehnung aufweist als in der Bewegungsrichtung.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Werkzeugträger einer Werkzeugmaschine, umfassend einen Werkzeughalterträger (62) mit einer sich in den Werkzeughalterträger (62) hinein erstreckenden Aufnahme (64), in welche ein Fixierkörper (72) eines Werkzeughalters (32) durch Bewegen desselben in einer Einsteckrichtung (74) einsteckbar und in einem eingesteckten Zustand durch Fixierung desselben in der Aufnahme (64) durch ein Formschlusselement (118) festlegbar ist, wobei das Formschlusselement ein Fixierkeilkörper (118) ist, der in dem Werkzeughalterträger (62) in einer quer zur Einsteckrichtung (74) verlaufenden Bewegungsrichtung (124) zwischen einer Freigabestellung und einer Fixierstellung bewegbar ist und dass der Fixierkeilkörper (118) in der Fixierstellung mit einer Keilaufnahme (112, 114) des Fixierkörpers (72) zusammenwirkt.
2. Werkzeugträger nach Ausführungsform 1, wobei der Fixierkeilkörper (118) in dem Werkzeughalterträger (62) linear bewegbar ist und mit einer Fixierkeilfläche (116) auf eine Keilfläche (114) der Keilaufnahme (112) des Fixierkörpers (72) wirkt.
3. Werkzeugträger nach einer der voranstehenden Ausführungsformen, wobei der Fixierkeilkörper (118) in einem Führungskanal (122) des Werkzeughalterträgers (62) bewegbar geführt ist.
4. Werkzeugträger nach einer der voranstehenden Ausführungsformen, wobei der Führungskanal (122) in die Aufnahme (64) quer zur Einsteckrichtung (74) eingreift.
5. Werkzeugträger nach einer der voranstehenden Ausführungsformen, wobei der Fixierkeilkörper (118) auf einer der Fixierkeilfläche (116) gegenüberliegenden Seite eine Abstützfläche (126) aufweist, mit welcher dieser zumindest in der Fixierstellung in dem Führungskanal (122) abgestützt geführt ist.
6. Werkzeugträger nach Ausführungsform 5, wobei der Fixierkeilkörper (118) in der Fixierstellung beiderseits der Aufnahme (64) in dem Führungskanal (122) mit seiner Abstützfläche (126) abgestützt ist.
7. Werkzeugträger nach einer der voranstehenden Ausführungsformen, wobei die Fixierkeilfläche (116) des Fixierkeilkörpers (118) in einer Ebene verläuft, die einen spitzen Winkel mit einer Führungsrichtung (124) des in dem Führungskanal (122) bewegbaren Fixierkeilkörpers (118) einschließt.
8. Werkzeugträger nach einer der voranstehenden Ausführungsformen, wobei der Fixierkeilkörper (118) durch eine Positioniereinheit (180) zwischen der Fixierstellung und der Freigabestellung bewegbar ist und mittels der Positioniereinheit (180) sowohl in der Fixierstellung als auch in der Freigabestellung positionierbar ist.
9. Werkzeugträger nach Ausführungsform 8, wobei die Positioniereinheit (180) auf einer einer werkstückzugewandten Frontseite (142) des Werkzeughalterträgers (62) abgewandten Seite am Werkzeughalterträger (62) angeordnet ist.
10. Werkzeugträger nach Ausführungsform 8 oder 9, wobei die Positioniereinheit (180) zum Bewegen des Fixierkeilkörper (118) zwischen der Fixierstellung und der Freigabestellung und zum Festlegen des Fixierkörpers (118) in der Fixierstellung manuell betätigbar ist.
11. Werkzeugträger nach einer der Ausführungsformen 8 bis 10, wobei die Positioniereinheit (180) eine Bajonettstruktur aufweist, mittels welcher der Fixierkeilkörper (118) sowohl in der Fixierstellung als auch der Freigabestellung positionierbar ist.
12. Werkzeugträger nach Ausführungsform 11, wobei die Positioniereinheit (180) einen Flanschkörper (184) mit Bajonettflanschen (186) aufweist, die mit einer Bajonettkontur (188) einer Führungshülse (192) zusammenwirken.
13. Werkzeugträger nach Ausführungsform 12, wobei die Bajonettkontur (188) zwei in einer Verschieberichtung (124) im Abstand voneinander und um eine zur die Verschieberichtung (124) parallele Achse um einen Winkel verdreht zueinander angeordnete Stützflächen (194, 196) aufweist.
14. Werkzeugträger nach Ausführungsform 12 oder 13, wobei der Flanschkörper (184) mit den Bajonettflanschen (186) mit einem Zentrierkörper (204) verbunden ist, welcher in der Führungshülse (192) in der Verschieberichtung (124) verschiebbar geführt ist.
15. Werkzeugträger nach einer der voranstehenden Ausführungsformen, wobei der Fixierkeilkörper (118) einstellbar mit der Positioniereinheit (180), insbesondere mit dem Zentrierkörper (204), gekoppelt ist.
16. Werkzeugträger nach Ausführungsform 15, wobei der Zentrierkörper (204) mittels einer mit dem Zentrierkörper (204) verschraubten Einstellschraube (222) mit dem Fixierkeilkörper (118) gekoppelt ist.
17. Werkzeugträger nach einer der voranstehenden Ausführungsformen, wobei der Werkzeughalterträger (62) eine Auflageseite (66) aufweist, auf welcher der Werkzeughalter (32) auflegbar ist.
18. Werkzeugträger nach Ausführungsform 17, wobei der Werkzeughalterträger (62) an der Auflageseite (66) mit ersten Formschlusselementen (82) versehen ist, welche sich insbesondere quer zu einer Vorschubrichtung (X) des Werkzeughalterträger (62) erstrecken.
19. Werkzeughalter (32) zur Fixierung an einem Werkzeugträger (30) insbesondere nach einer der voranstehenden Ausführungsformen, wobei der Werkzeughalter (32) einen Fixierkörper (72) aufweist, welcher in die Aufnahme (64) des Werkzeugträgers (30) einsetzbar ist.
20. Werkzeughalter nach Ausführungsform 19, wobei der Fixierkörper (72) als Keilaufnahme einen Durchbruch (112) aufweist, in welchem eine Keilfläche (114) vorgesehen ist, welche durch einen Fixierkeilkörper (118) des Werkzeugträgers (30) mit seiner Fixierkeilfläche (116) in der Fixierstellung beaufschlagt ist.
21. Werkzeughalter (32) nach einer der Ausführungsformen 19 oder 20, wobei dieser einen Abstützkörper (104) aufweist, welche mit einer Abstützseite (102) auf der Auflageseite (66) des Werkzeughalterträgers (62) auflegbar ist.
22. Werkzeughalter nach einer der Ausführungsformen 19 bis 21, wobei der Fixierkörper (72) sich ausgehend von der Abstützseite (102) des Abstützkörpers (104) vom Abstützkörper (104) weg erstreckt.
23. Werkzeughalter nach einer der Ausführungsformen 19 bis 22, wobei der Abstützkörper (104) an der Abstützseite (102) mit zweiten Formschlusselementen (92) versehen ist, welche mit ersten Formschlusselementen (82) des Werkzeughalterträgers (62) bei auf dem Werkzeughalterträger (62) fixiertem Werkzeughalter (32) in Eingriff stehen.
24. Werkzeughalter nach Ausführungsform 23, wobei die zweiten Formschlusselemente (92) im Zusammenwirken mit den ersten Formschlusselementen (82) den Werkzeughalter (32) relativ zum Werkzeughalterträger (62) in einer Vorschubrichtung (X) des Werkzeugträgers (30) exakt positionieren.
25. Werkzeughalter nach einer der Ausführungsformen 19 bis 24, wobei der Fixierkörper (72) in Richtung quer zu einer Bewegungsrichtung (124) des Fixierkeilkörpers (118) eine größere Ausdehnung aufweist als in der Bewegungsrichtung (124).

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine ausschnittsweise perspektivische Darstellung einer Werkzeugmaschine mit Werkzeugträgern und Werkstückspindeln;
- Fig. 2: eine perspektivische Darstellung eines Werkzeugträgers mit einem auf diesem montierten Werkzeughalter mit einem Werkzeug;
- Fig. 3: eine Explosionsdarstellung des Werkzeughalters und des Werkzeugträgers gemäß Fig. 2;
- Fig. 4: eine perspektivische Darstellung des erfindungsgemäßen Werkzeughalters insbesondere mit Blick auf eine Abstützseite und einen Fixierkörper desselben;

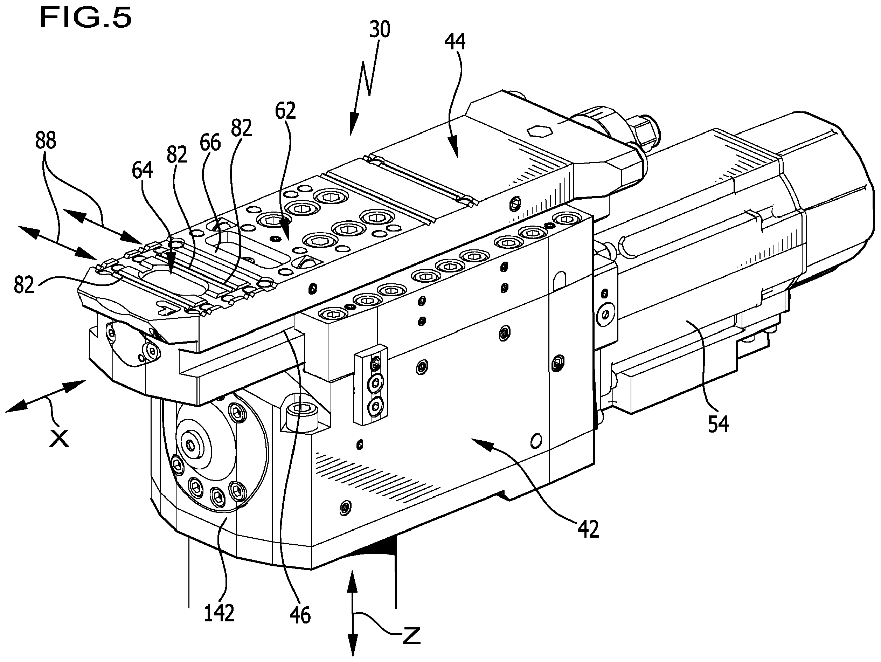

- Fig. 5: eine perspektivische Darstellung eines erfindungsgemäßen Werkzeugträgers mit Blick auf eine Auflageseite desselben;
- Fig. 6: einen Schnitt durch den Werkzeugträger mit dem aufgesetzten Werkzeughalter längs Linie 6-6 in Fig. 2;
- Fig. 7: einen Schnitt durch den auf den Werkzeugträger aufgesetzten Werkzeughalter längs Linie 7-7 in Fig. 6;
- Fig. 8: einen Schnitt durch die gesamte Einheit von Werkzeugträger und Werkzeughalter mit einer Positioniereinheit und einem in Fixierstellung stehenden Fixierkeilkörper;

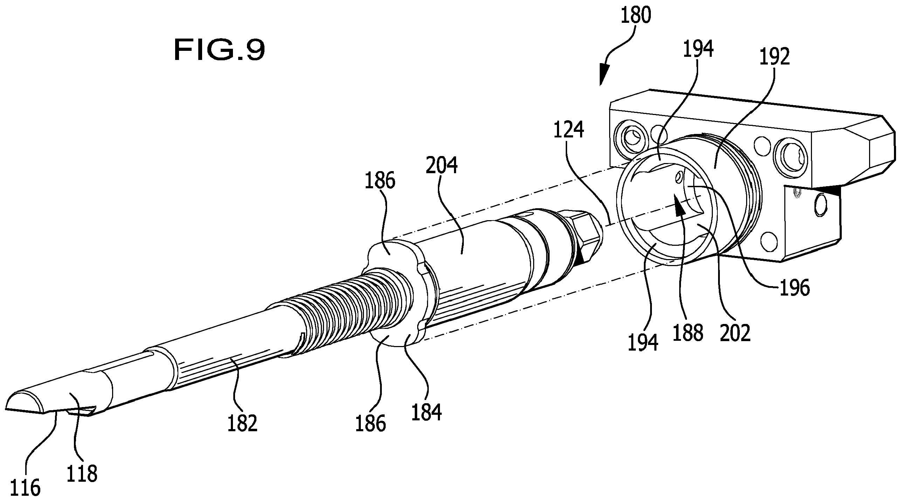

- Fig. 9: eine perspektivische Explosionsdarstellung einer erfindungsgemäßen Positioniereinheit;
- Fig. 10: einen Schnitt ähnlich Fig. 8 bei in Freigabestellung stehendem Fixierkeilkörper;
- Fig. 11: eine Explosionsdarstellung ähnlich Fig. 3 eines erfindungsgemäßen Werkzeugträgers mit einem erfindungsgemäßen Werkzeughalter und einem weiteren auf dem Werkzeugträger zusätzlich zu dem erfindungsgemäßen Werkzeughalter montierten Werkzeughalter und
- Fig. 12: eine perspektivische Darstellung ähnlich Fig. 3 eines erfindungsgemäßen Werkzeugträgers mit einem weiteren nicht erfindungsgemäßen konventionellen Werkzeughalter mit einer Antriebseinheit.

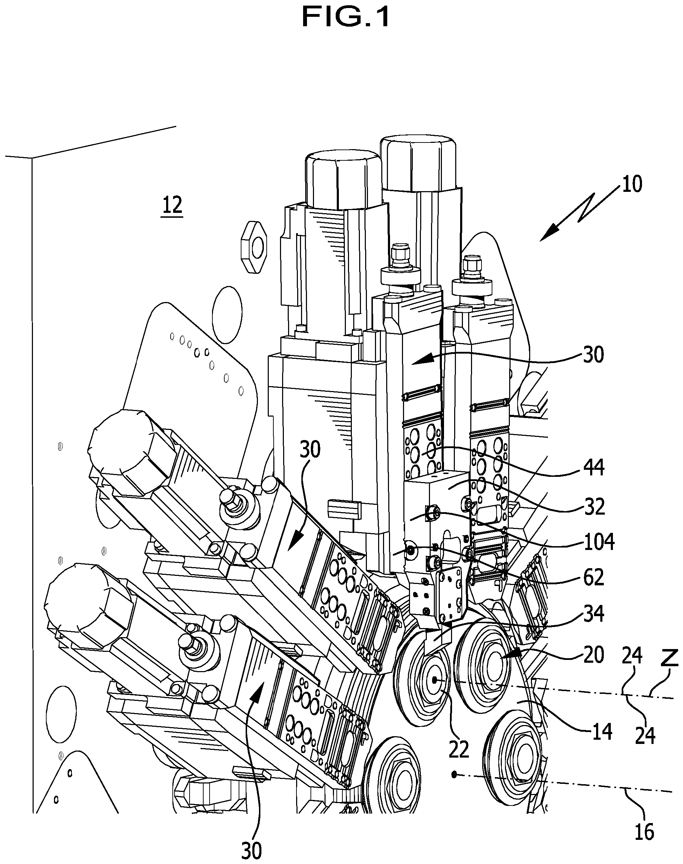

Eine in Fig. 1 dargestellte Werkzeugmaschine 10, insbesondere eine Drehmaschine, vorzugsweise im dargestellten Ausführungsbeispiel eine Mehrspindeldrehmaschine, umfasst ein als Ganzes mit 12 bezeichnetes Maschinengestell, an welchem im Fall einer Mehrspindelmaschine eine Spindeltrommel 14 um eine Spindeltrommelachse 16 gelagert ist.

Die Spindeltrommel 14 trägt ihrerseits im Fall einer Mehrspindeldrehmaschine eine Mehrzahl von Werkstückspindeln 20, die um die Spindeltrommelachse 16 in gleichen Winkelabständen relativ zueinander angeordnet sind.

Durch Drehen der Spindeltrommel 14 um die Spindeltrommelachse 16 sind die einzelnen Werkstückspindeln 20 in einzelnen Spindelstationen positionierbar, in welchen den sich um Spindelachsen 24 drehenden und in den Werkstückspindeln 20 aufgenommenen Werkstücke 22 eine Bearbeitung erfolgen kann.

Zur Bearbeitung der Werkstücke 22 in den einzelnen Spindelstationen sind an dem Maschinengestell als Ganzes mit 30 bezeichnete Werkzeugträger angeordnet, die Werkzeughalter 32 mit von diesen Werkzeughaltern 32 gehaltenen Werkzeugen 34 tragen (Fig. 1).

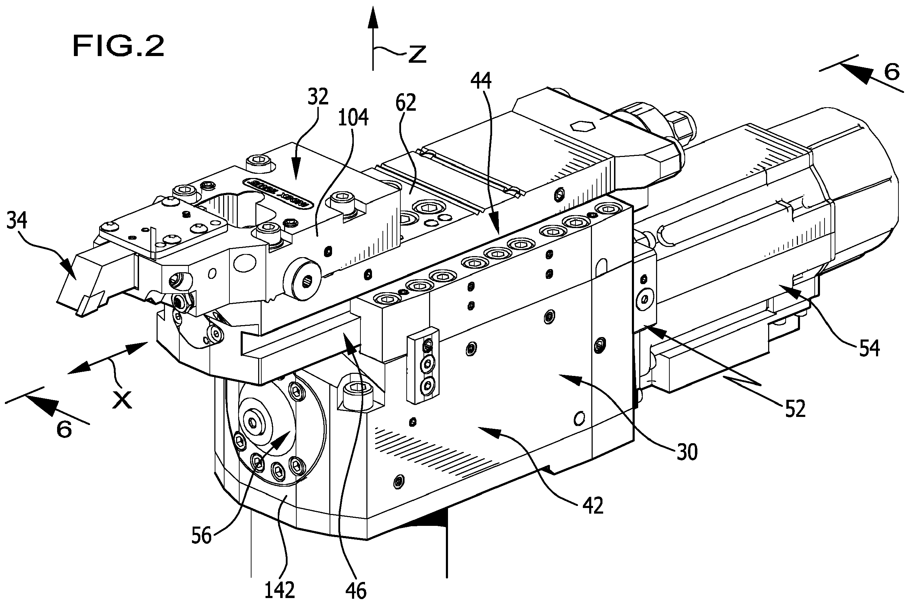

Wie in Fig. 1 und 2 dargestellt, sind die Werkzeugträger 30 so ausgebildet, dass diese beispielsweise parallel zu einer Z-Achse, das heißt parallel zu der Spindelachse 24 der Werkstückspindeln 20 bewegbar sind und ihrerseits eine Werkzeugträgerbasis 42 aufweisen, an welcher ein Werkzeugschlitten 44 mittels einer Schlittenführung 46 längs einer Vorschubachse X verschiebbar geführt ist, wobei die Achse X vorzugsweise radial zur jeweiligen Spindelachse 24 der in der jeweiligen Spindelstation stehenden Werkstückspindel 20 verläuft.

Zum Antrieb der Bewegungen des Werkzeugschlittens 44 in der X-Richtung ist die Werkzeugträgerbasis 42 mit einem Schlittenantrieb 52 versehen, welcher einen Antriebsmotor 54 aufweist, der beispielsweise einen in der Werkzeugträgerbasis 42 angeordneten und daher in Fig. 2 nicht sichtbaren Spindelantrieb 56 antreibt, mittels welchem eine Verschiebung des Werkzeugschlittens 44 in der X-Richtung erfolgt.

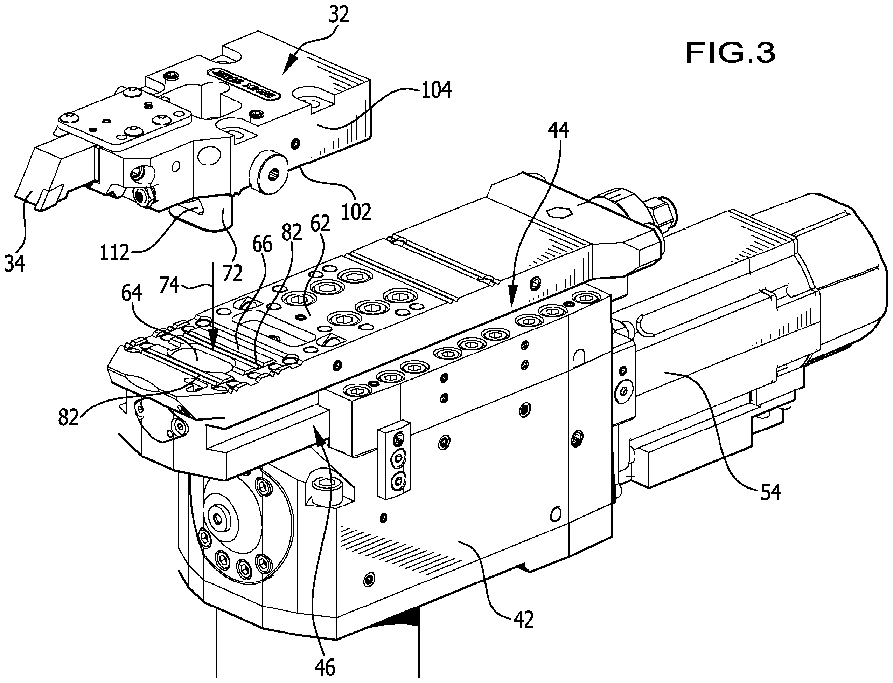

Der Werkzeugschlitten 44 umfasst seinerseits einen Werkzeughalterträger 62, auf welchem, wie in Fig. 2 und 3 dargestellt, der Werkzeughalter 32 mit dem Werkzeug 34 fixierbar ist.

Zur Aufnahme des Werkzeughalters 32 ist der Werkzeughalterkörper 62 mit einer Aufnahme 64 versehen, welches sich von einer Auflageseite 66 des Werkzeughalterträgers 62 für den Werkzeughalter 32 in den Werkzeughalterträger 62 hinein erstreckt und dazu dient, einen Fixierkörper 72 des Werkzeughalters 32 aufzunehmen, wobei der Fixierkörper 72 in einer Einsteckrichtung 74, die quer zur Auflageseite 66 verläuft, in die Aufnahme 64 hinein bewegbar ist und in der Aufnahme 64, wie nachfolgend noch im Detail beschrieben, fixierbar ist.

Zur zusätzlichen Stabilisierung des Werkzeughalters 32 relativ zum Werkzeughalterträger 62, ist der Werkzeughalterträger 62 im Bereich seiner Auflageseite 66 und seitlich der Aufnahme 64 mit ersten Formschlusselementen 82 versehen, die quer, vorzugsweise senkrecht zur X-Richtung verlaufen und in X-Richtung beiderseits der Aufnahme 64 in der Auflageseite 66 vorgesehen sind.

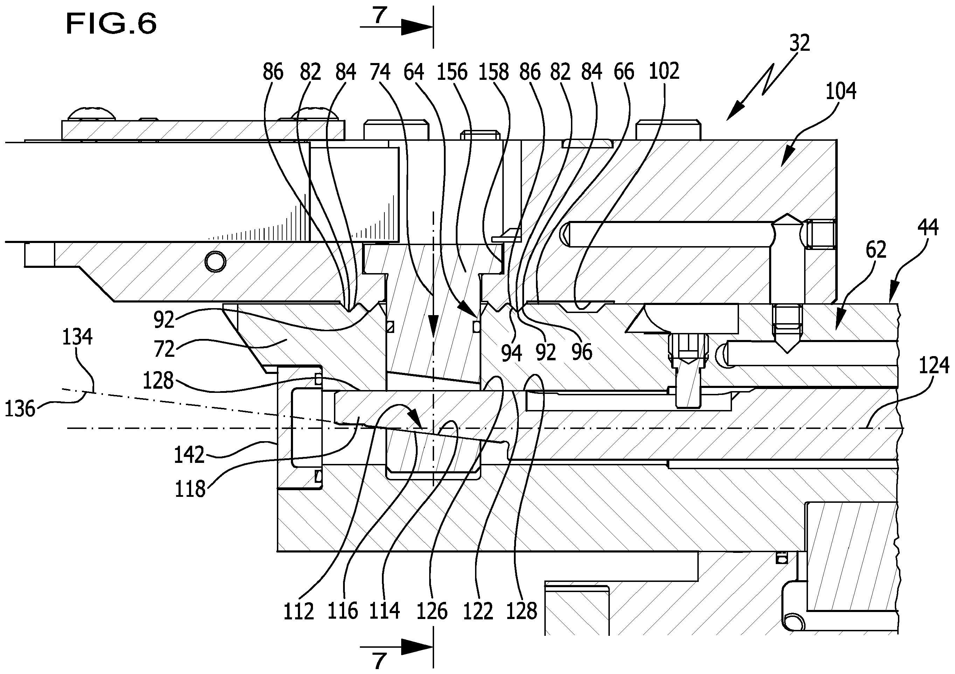

Die ersten Formschlusselemente 82 weisen dabei, wie in Fig. 6 dargestellt, schräg, insbesondere in einem spitzen Winkel zur Einsteckrichtung 74 verlaufende Flankenflächen 84 und 86 auf und sind vorzugsweise als sich mit ihren Erstreckungsrichtungen 88 parallel zueinander verlaufende Nuten ausgebildet, wobei die Erstreckungsrichtungen 88 ihrerseits quer, vorzugsweise senkrecht zur X-Richtung verlaufen.

Vorzugsweise verlaufen auch die Flankenflächen 84 und 86 in denselben Abständen relativ zueinander, so dass die Formschlusselemente 82 quer zu den Erstreckungsrichtungen 88 über ihre Erstreckung in der Erstreckungsrichtung 88 eine konstante Querschnittsform aufweisen.

Mit den auf der Auflageseite 66 angeordneten ersten Formschlusselementen 82 wirken zweite Formschlusselemente 92 zusammen, die komplementär zu den ersten Formschlusselementen 82 ausgebildet sind und Flankenflächen 94 und 96 aufweisen, die an den Flankenflächen 84 und 86 der ersten Formschlusselemente 82 zur Anlage bringbar sind (Fig. 6).

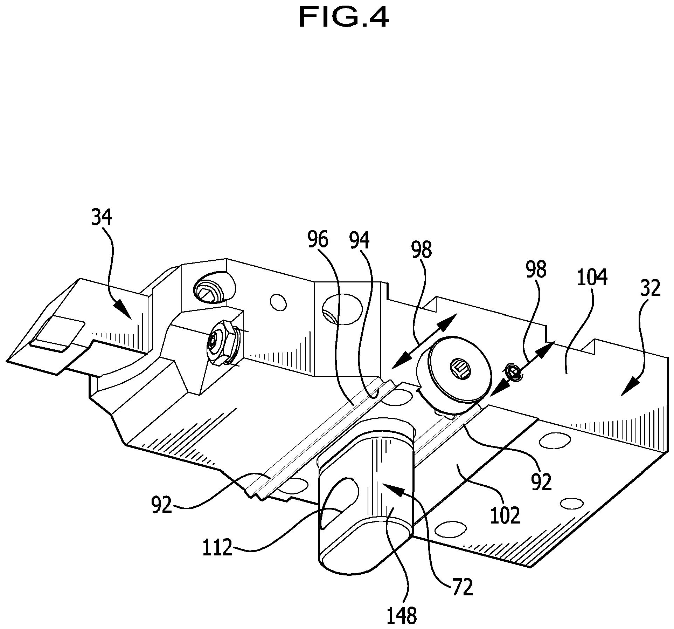

Diese zweiten Formschlusselemente 92 erstrecken sich ebenfalls mit ihren Erstreckungsrichtungen 98 parallel zu den Erstreckungsrichtungen 88 der ersten Formschlusselemente und sind auf einer Abstützseite 102 eines Abstützkörpers 104 des Werkzeughalters 32 angeordnet (Fig. 4, 6).

Vorzugsweise sind die Formschlusselemente 82, 92 so ausgebildet, wie in der EP 1 514 623 A1 beschrieben, auf welche vollinhaltlich Bezug genommen wird.

Dabei ist der Fixierkörper 72 ebenfalls zwischen den zweiten Formschlusselementen 92 angeordnet und erstreckt sich ausgehend von der Abstützseite 102 des Abstützkörpers 104 weg von diesem.

Bei auf dem Werkzeughalterträger 62 auf der Auflageseite 66 mit seiner Abstützseite 102 aufliegendem Abstützkörper 104 des Werkzeughalters 32 greifen die ersten Formschlusselemente 82 und die zweiten Formschlusselemente 92 ineinander und bewirken eine Fixierung des Abstützkörpers 104 relativ zum Werkzeughalterträger 62 gegen eine Verschiebung in X-Richtung und gleichzeitig auch gegen eine Verdrehung um eine parallel zur Einsteckrichtung 74 verlaufende mögliche Drehachse.

Somit ist bereits durch die Formschlusselemente 82 und 92 der Abstützkörper 104 des Werkzeughalters 32 gegen eine Bewegung in der X-Richtung formschlüssig fixiert, so dass die ersten und zweiten Formschlusselemente 82, 92 lediglich noch eine Bewegung in Richtung der Erstreckungsrichtungen 88 beziehungsweise 98 zulassen würden.

Derartige Bewegungen des Abstützkörpers 104 relativ zum Werkzeughalterträger 62 werden jedoch dadurch verhindert, dass der Fixierkörper 72 in die Aufnahme 64 des Werkzeughalterträgers 62 mit einer Kraft eingezogen wird und somit insbesondere gegen Bewegungen quer zur X-Richtung eine Fixierung durch Kraftschluss zwischen dem Werkzeughalterträger 62 und dem Abstützkörper 104 erfolgt, wie nachfolgend im Detail erläutert.

Zur Festlegung des Fixierkörpers 72 in der Aufnahme 64 des Werkzeughalterträgers 62 und zur Erzeugung einer in der Einsteckrichtung 74 wirkenden Kraft zur Beaufschlagung des Abstützkörpers 104 des Werkzeughalters 32 in Richtung des Werkzeughalterträgers 62 ist der Fixierkörper 72 mit einem sich quer zur Einsteckrichtung 74 durch den Fixierkörper 72 hindurch erstreckenden Durchbruch 112 versehen (Fig. 4 und Fig. 6), wobei der Durchbruch 112 auf einer dem Abstützkörper 104 gegenüberliegenden Seite eine Keilfläche 114 aufweist, die quer zur Einsteckrichtung 74 verläuft.

Zur Fixierung des Fixierkörpers 72 in der Aufnahme 64 wirkt die Keilfläche 114 mit einer Fixierkeilfläche 116 eines Fixierkeilkörpers 118 zusammen, der in den Durchbruch 112 einführbar ist.

Der Fixierkeilkörper 118 ist dabei in einem Führungskanal 122 im Werkzeughalterträger 62 geführt, wobei der Führungskanal 122 quer zu der Aufnahme 64, vorzugsweise senkrecht zur Aufnahme 64, im Werkzeughalterträger 62 verläuft und diese durchsetzt und sich somit beiderseits der Aufnahme 64 erstreckt.

Der Führungskanal 122 definiert dabei eine Führungsrichtung 124, längs welcher der Fixierkeilkörper 118 bewegbar ist.

Der Fixierkeilkörper 118 ist dabei so ausgebildet, dass er dann, wenn die Fixierkeilfläche 116 auf die Keilfläche 114 des Fixierkörpers 72 wirkt, und diesen mit einer in der Einsteckrichtung 74 wirkenden Kraft beaufschlagt, mit einer der Fixierkeilfläche 116 gegenüberliegenden Auflageseite 126 sich beiderseits der Aufnahme 64 in dem Führungskanal 122 in an die Aufnahme 64 angrenzenden Abstützbereichen 128 abstützt, so dass die auf die Keilfläche 114 einwirkende Fixierkeilfläche 116 zwischen diesen beiden Abstützbereichen 128 liegt und somit die Möglichkeit besteht, durch die beiderseitige Abstützung des Fixierkeilkörpers 118 mit großen Kräften auf die Keilfläche 114 einzuwirken.

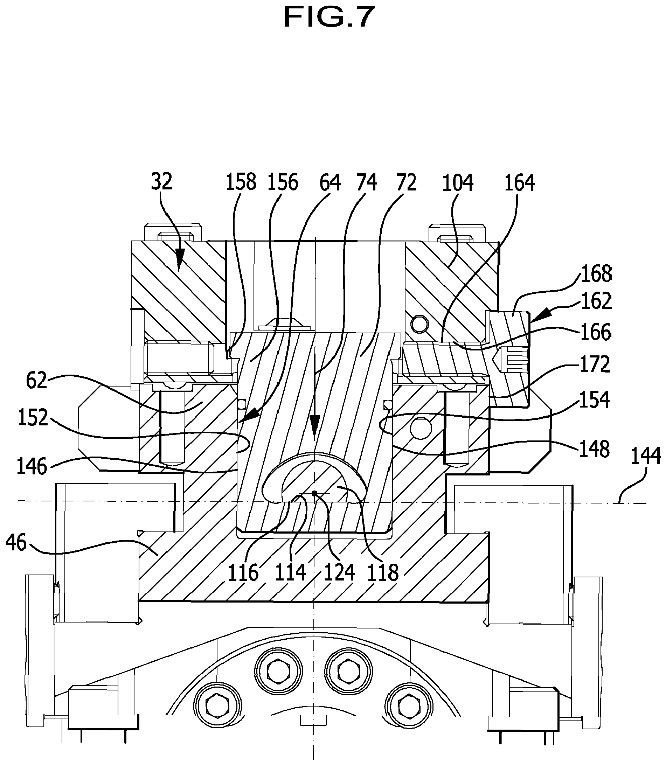

Vorzugsweise sind, wie in Fig. 6 und 7 dargestellt, die Formen der Keilfläche 114 und der Fixierkeilfläche 116 aneinander angepasst, so dass diese flächenhaft und mit möglichst großer Auflagefläche aneinander anliegen.

Im einfachsten Fall verlaufen die Keilfläche 114 und die Fixierkeilfläche 116 beim Zusammenwirken in miteinander zusammenfallenden und zueinander parallelen Ebenen 134 beziehungsweise 136, die einerseits einen spitzen Winkel zur Führungsrichtung 124 aufweisen und zur Einsteckrichtung 74 verlaufen.

Vorzugsweise sind die zueinander parallelen und beim Zusammenwirken der Keilfläche 114 und der Fixierkeilfläche 116 zusammenfallenden Ebenen 134, 136 so ausgerichtet, dass sie dadurch, dass sie mit der Führungsrichtung 124 einen spitzen Winkel einschließen, mit zunehmendem Abstand von einer der jeweiligen Werkstückspindel 20 und somit dem Werkstück zugewandten Frontseite 142 des Werkzeughalterträgers 62 ebenfalls mit zunehmendem Abstand von der Auflageseite 66 verlaufen und außerdem parallel zu einer senkrecht zur Einsteckrichtung 74 und zur Führungsrichtung 124 verlaufenden Querrichtung 144 verlaufen, wobei die Querrichtung 144 ihrerseits vorzugsweise parallel zur Auflageseite 66 und vorzugsweise auch parallel zur X-Richtung ausgerichtet ist (Fig. 7).

Wie in den Fig. 4, 6 und 7 dargestellt, weist der Fixierkörper 72 parallel zur Einsteckrichtung 74 verlaufende Querseitenflächen 146 und 148 auf, welche an den entsprechenden Querführungsflächen 152 und 154 der Aufnahme 64 anliegen und mit diesen eine Querfixierung des Fixierkörpers 72 gegen eine Bewegung in der Querrichtung 144 bewirken. Der Abstützkörper 104 und folglich auch der Werkzeughalter 32 sind beispielsweise in Richtung parallel zu der Querrichtung 144 und somit auch parallel zu den Erstreckungsrichtungen 88 und 98 der ersten und zweiten Formschlusselemente 82, 92 relativ zum Fixierkörper 72 begrenzt bewegbar, da dieser mit einem T-förmig ausgebildeten Kopf 156 zumindest in Richtung parallel zu der Querrichtung 144 mit Spiel in einer Aufnahme 158 des Abstützkörpers 104 gehalten ist.

Um die durch das Spiel zwischen dem Abstützkörper 104 und dem Fixierkörper 72 bestehende Beweglichkeit des Abstützkörpers 104 in der Querrichtung 144 zur exakten Ausrichtung des Abstützkörpers 104 relativ zum Werkstück 22 auszunutzen, ist noch eine Ausrichtschraube 162 vorgesehen, die mit ihrem Gewindeabschnitt 164 in eine parallel zur Querrichtung 144 im Abstützkörper 104 verlaufende Gewindebohrung 166 eingreift und mit ihrem Kopf 168 an einer Ausrichtfläche 172 des Werkzeughalterträgers 62 anlegbar ist, um den Abstützkörper 104 präzise relativ zum Werkzeughalterträger 62 beispielsweise durch in Anlage bringen der Querfläche 148 an der Führungsfläche 154, zu positionieren.

Ein Fixieren des Abstützkörpers 104 relativ zum Werkzeughalterträger 62 erfolgt durch Kraftschluss zwischen der Abstützseite 102 des Abstützkörpers 104 und der Auflageseite 66 des Werkzeughalterträgers 62, wobei die Kraft mit der die Abstützseite 102 auf die Auflageseite 66 wirkt, durch Einwirken des Fixierkeilkörpers 118 auf den Fixierkörper 72 erzeugt wird.

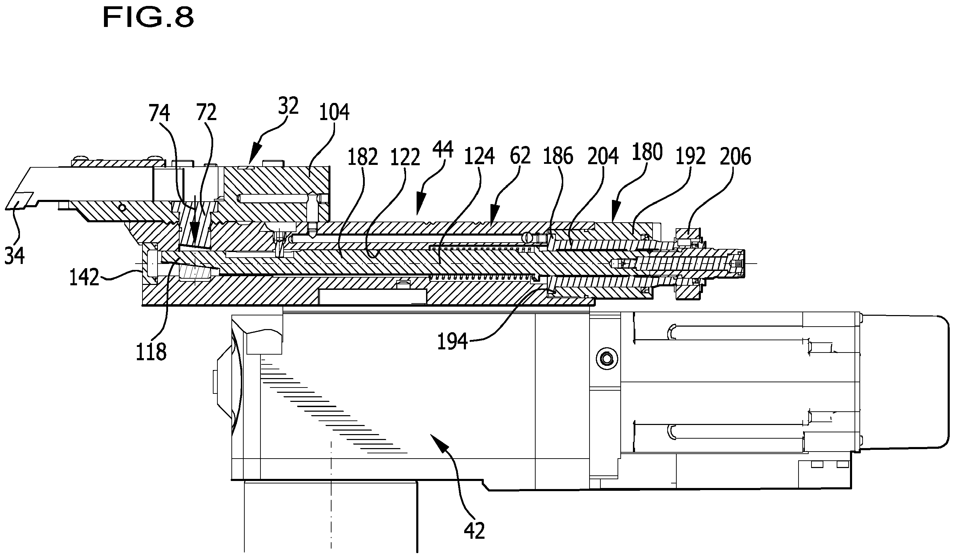

Bei dem dargestellten Ausführungsbeispiel erstreckt sich der Führungskanal 122 von der Aufnahme 64 bis zu einer Positioniereinheit 180 für den Keilkörper 118, wobei ein sich in Fortsetzung des Keilkörpers 118 erstreckender Verschiebekörper 182 in dem Führungskanal 122 verläuft, welcher den Keilkörper 118 mit der Positioniereinheit 180 verbindet (Fig. 8).

Die Positioniereinheit 180 ist vorzugsweise manuell betätigbar. Sie umfasst eine Bajonettstruktur gebildet aus einem sich quer zur Führungsrichtung 124 erstreckenden Flanschkörper 184, der mit einander gegenüberliegenden Bajonettflanschen 186 versehen ist, die mit einer Bajonettkontur 188 zusammenwirken, die auf einer innenliegenden Seite einer Führungshülse 192 ausgebildet ist und dabei in der Führungsrichtung 124 im Abstand voneinander angeordnete vordere Stützflächen 194 aufweist, an welchen die Bajonettflansche 186 dann anliegen, wenn der Fixierkeilkörper 118 in der Fixierstellung stehen soll, und hintere Stützflächen 196 aufweist, an welchen die Bajonettflansche 186 dann anliegen, wenn der Fixierkeilkörper 118 in einer Freigabestellung stehen soll, in welcher der Fixierkeilkörper 118 nicht in den Durchbruch 112 eingreift und nicht an der Keilfläche 114 anliegt, sondern in dem Führungskanal 122 soweit zurückgezogen ist, dass dieser auch nicht in die Aufnahme 64 eingreift.

Dabei sind die Stützflächen 194 und 196 beispielsweise um 90° gegeneinander verdreht angeordnet.

Ferner bildet die Führungshülse 192 noch zur Führungsrichtung 124 parallel Führungsflächen 202, an welchen ein sich an den Flanschkörper 184 auf einer dem Fixierkeilkörper 118 gegenüberliegenden Seite anschließender Zentrierkörper 204 in der Führungsrichtung 124 bewegbar geführt ist, wobei, der Zentrierkörper 204 fest mit dem die Bajonettflansche 186 tragenden Flanschkörper 184 verbunden ist und den Verschiebekörper 182 umschließt.

Zum Verschieben und Verdrehen des Flanschkörpers 184 mit den Bajonettflanschen 186 trägt der Zentrierkörper 204 auf einer dem Flanschkörper 184 abgewandten Seite der Führungshülse 192 ein Betätigungselement 206, welches beispielsweise als Handbetätigungselement ausgebildet ist, und es erlaubt, den Zentrierkörper 204 mitsamt dem Flanschkörper 184 und den Bajonettflanschen 186 relativ zur Führungshülse 192 zu verschieben und so um eine zur Führungsrichtung 124 parallel Achse zu verdrehen, dass entweder die Bajonettflansche 186 an den vorderen Stützflächen 194 oder den hinteren Stützflächen 196 zur Anlage kommen.

Um zu erreichen, dass die Bajonettflansche 186 an den jeweiligen Stützflächen 194 und 196 anliegen, und um somit die Bajonettflansche 186 in Anlage an den Stützflächen 194, 196 zu halten, ist vorzugsweise noch eine Druckfeder 208 vorgesehen, die sich einerseits an einer Stufe 212 oder einem Absatz im Führungskanal 122 abstützt und andererseits auf einem Bund 214 des Verschiebekörpers 182 wirkt und somit das Bestreben hat, den Verschiebekörper 182 und mit diesem auch den mit diesem gekoppelten Zentrierkörper 204 von der Fixierstellung in Richtung der Freigabestellung zu bewegen.

Der Verschiebekörper 182 ist über eine mit diesem drehbar verbundene Einstellschraube 222 mit dem Zentrierkörper 204 dadurch verbunden, dass ein Außengewinde 224 der Einstellschraube 222 in ein Innengewinde 226 des Zentrierkörpers 204 eingreift, und somit ist der Verschiebekörper 182 relativ zum Zentrierkörper 204 definiert positionierbar.

Dies führt dazu, dass unter Wirkung der Druckfeder 208 auch der Zentrierkörper 204 mit den fest mit diesem verbundenen Bajonettflanschen 186 von der Fixierstellung weg in Richtung der Freigabestellung beaufschlagt ist, so dass stets die Bajonettflansche 186 entweder an den hinteren, der Freigabestellung entsprechenden Stützflächen 196, in Anlage gehalten werden oder an den vorderen, eine Ausgangsstellung für die Fixierstellung vorgebenden Stützflächen 194 in Anlage gehalten werden.

Ferner erlaubt die Einstellschraube 222 eine einstellbare Positionierung des Fixierkeilkörpers 118 relativ zu der Ausgangsstellung für die Fixierstellung.

Somit besteht die Möglichkeit, den Fixierkeilkörper 118 durch die Positioniereinheit 180 relativ zu dem Werkzeughalterträger 62 in der Fixierstellung zu positionieren und somit auch relativ zum in der Aufnahme 64 sitzenden Fixierkörper 72 zu positionieren und somit eine einstellbare Positionierung der Fixierkeilfläche 116 des Fixierkeilkörpers 118 relativ zur Keilfläche 114 des Fixierkörpers 72 zu ermöglichen und durch eine derartige Positionierung des Fixierkeilkörpers 118 relativ zum Fixierkörper 72 zu erreichen, dass der Fixierkeilkörper 118 den Fixierkörper 72 mit einer in Richtung der Einsteckrichtung 74 wirkenden Kraft beaufschlagt, so dass die ersten und zweiten Formschlusselemente 82 und 92 spielfrei in Anlage gehalten werden.

Der Fixierkörper 72 des Werkzeughalters 32 und der am Werkzeughalterträger 62 bewegbar angeordnete Fixierkeilkörper 118 mit der Positioniereinheit 180 bilden somit eine Schnellspanneinrichtung für den Werkzeugträger 30.

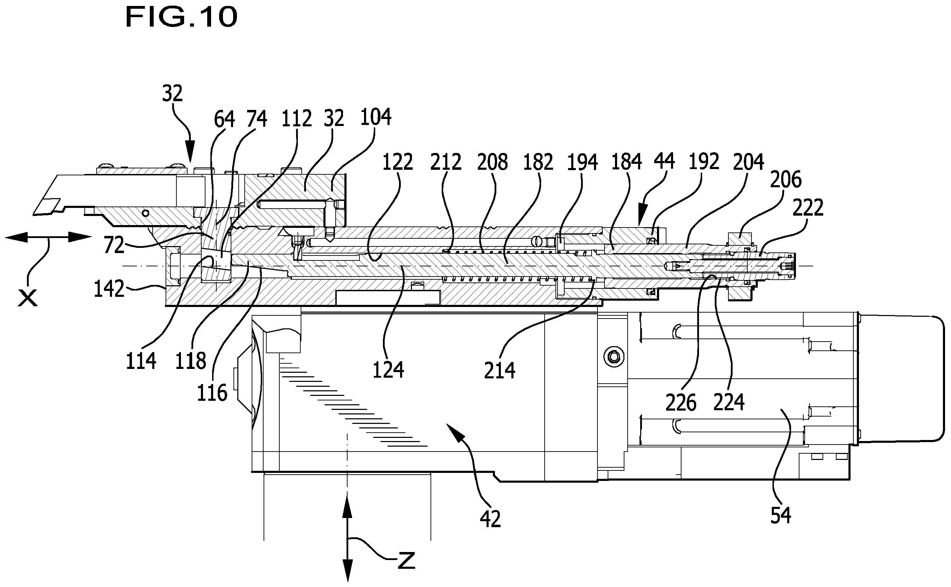

Zum Bewegen des Fixierkeilkörpers 118 von der beispielsweise in Fig. 10 dargestellten Freigabestellung in die beispielsweise in Fig. 8 dargestellte Fixierstellung erfolgt durch manuelles Einwirken auf das Betätigungselement 206 ein Verschieben desselben in Richtung der Führungsrichtung 124 in Richtung der Frontseite 142, so dass die Bajonettflansche 186 sich von den hinteren Stützflächen 196 abheben und ebenfalls in Richtung der Frontseite 142 bewegen, so lange bis sie in Höhe der vorderen Stützflächen 194 liegen, so dass durch Verdrehen des Zentrierkörpers 204 die Flanschkörper 184 an den vorderen Stützflächen 194 der Führungshülse 192 zur Anlage gebracht werden können und die Ausgangsstellung für die Fixierstellung vorgeben.

Hierbei erfolgt eine Beaufschlagung der Bajonettflansche 186 durch die Druckfeder 208.

Diese Verschiebung des Zentrierkörpers 204 führt gleichzeitig zu einer Verschiebung des Fixierkeilkörpers 118 derart, dass dieser in den Durchbruch 112 des Fixierkörpers 72 eingreift und mit der Fixierkeilfläche 116 auf die Keilfläche 114 des Fixierkörpers 72 wirkt.

In dieser Stellung ist jedoch noch kein Verspannen des Fixierkörpers 72 in der Aufnahme 64 erfolgt.

Das finale Verspannen des Fixierkörpers 72 in der Aufnahme 64 erfolgt durch Verdrehen der Einstellschraube 222, die drehbar mit dem Verschiebekörper 182 verbunden ist, so dass dadurch ein geringfügiges weiteres Verschieben des Fixierkeilkörpers 118 zum Verspannen des Fixierkörpers 72 in der Aufnahme 64 führt, so dass der Fixierkeilkörper 118 einerseits mit den beiden Abstützbereichen 128 in dem Führungskanal 122 abgestützt ist und andererseits mit der Fixierkeilfläche 116 auf die Keilfläche des Fixierkörpers 72 wirkt und somit diesen in Richtung der Einsteckrichtung 74 mit einer Kraft beaufschlagt, die gleichzeitig bewirkt, dass die Formschlusselemente 82 und 92 kraftbeaufschlagt aneinander anliegen.

Zum Lösen der Fixierung des Fixierkörpers 72 erfolgt wieder ein Verdrehen der Einstellschraube 222 in umgekehrter Richtung, so dass sich die Verspannung zwischen dem Fixierkeilkörper 118 und dem Fixierkörper 72 löst.

In dieser Stellung ist wieder durch manuelles Angreifen an dem Betätigungselement 206 ein Verdrehen des Flanschkörpers 184 mit den Bajonettflanschen 186 durch Verdrehen des Zentrierkörpers 204 möglich, so dass sich die Bajonettflansche 186 von den vorderen Stützflächen 194 lösen und nach Lösen von diesen vorderen Stützflächen 184 beaufschlagt durch die Druckfeder 208 sich in Richtung der hinteren Stützflächen 196 bewegen und dann durch die Druckfeder 208 an den hinteren Stützflächen in Anlage gehalten werden.

Somit wird durch die Druckfeder 208 dann der Fixierkeilkörper 118 in der Freigabestellung gehalten.

Damit ermöglicht die erfindungsgemäße Schnellspanneinrichtung eine einfach und schnell realisierbare Fixierung des Werkzeughalters 32 relativ zu dem Werkzeughalterträger 62, die andererseits eine präzise Positionierung des Werkzeughalters 32 relativ zu dem Werkzeughalterträger 62 ermöglicht.

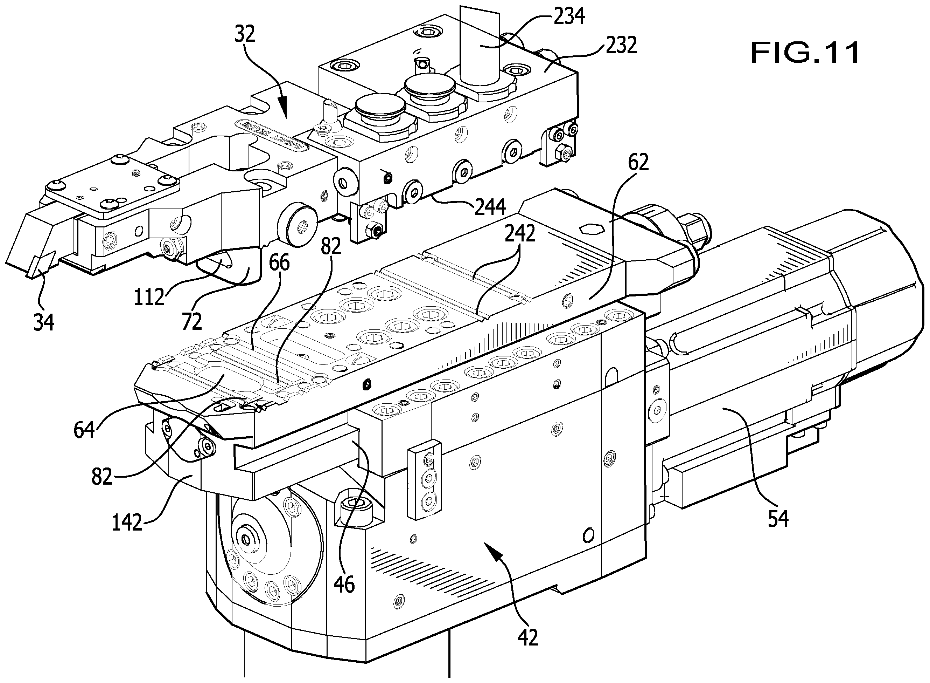

Bei einer Variante des ersten Ausführungsbeispiels, dargestellt in Fig. 11, ist auf dem Werkzeughalterträger 62 nicht nur der Werkzeughalter 32 mit dem Werkzeug 34 montierbar, sondern ein zusätzlicher Werkzeughalter 232, welcher beispielsweise ein Werkzeug 234 zu einer Rückseitenbearbeitung eines von einer Gegenspindel gehaltenen Werkstücks trägt.

Die Montage des zweiten Werkzeughalters 232 erfolgt dabei nicht über den Fixierkörper 72, sondern in konventioneller Weise mittels quer zur Auflageseite 66 in den Werkzeughalterträger 62 einschraubbaren Schrauben.

Ferner sind zusätzlich zur exakten Positionierung des zweiten Werkzeughalters 232 ebenfalls noch Formschlusselemente 242 vorgesehen, die mit ebenfalls am zweiten Werkzeughalter 232 angeordneten Formschlusselementen 244 zusammenwirken (Fig. 11).

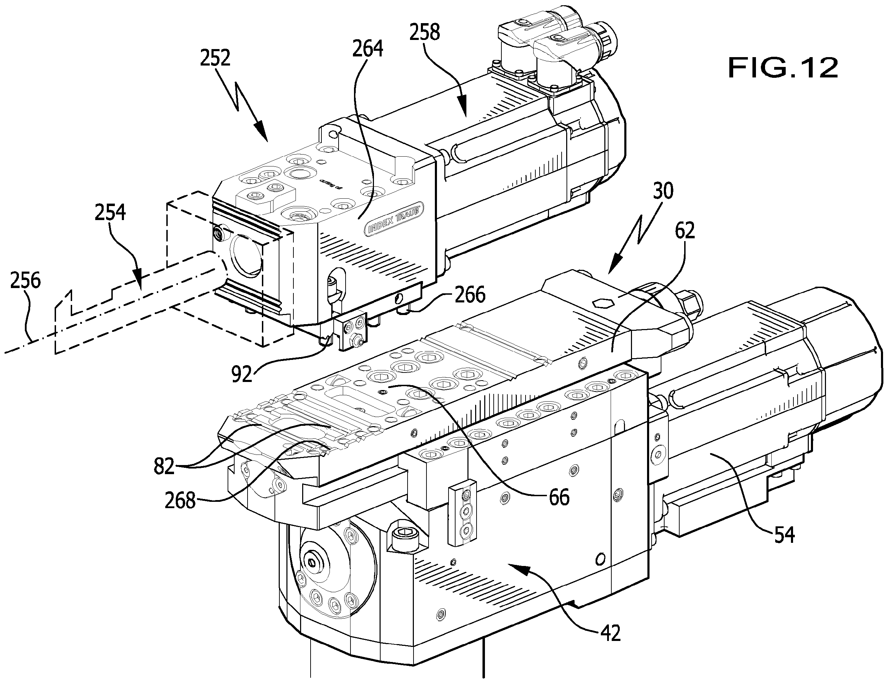

Bei einer weiteren Variante der erfindungsgemäßen Lösung ist auf dem erfindungsgemäßen Werkzeugträger 30 ein als Ganzes mit 252 bezeichneter angetriebener Werkzeughalter montierbar, wobei dieser ein um eine Achse 256 drehbar antreibbares Werkzeug 254 (gestrichelt dargestellt) trägt (Fig. 12).

Zum drehbaren Antrieb des Werkzeugs 254 ist ein als Ganzes mit 258 bezeichneter Antriebsmotor vorgesehen, welcher an einem Abstützkörper 264 des dritten Werkzeughalters 252 angeflanscht ist.

Der Abstützkörper 264 ist seinerseits mit Formschlusselementen 92 versehen, die mit den Formschlusselementen 82 auf der Abstützseite 66 des Werkzeughalterträgers 62 zusammenwirken, wobei in diesem Fall ebenfalls die Fixierung des Abstützkörpers 104 an dem Werkzeughalterträger 62 in konventioneller Weise durch Schrauben 266 erfolgt, welche in entsprechende Schraubenlöcher 268 im Werkzeughalterträger 62 eingreifen.

Das heißt, dass bei dieser Variante der dritte Werkzeughalter 252 konventionell und nicht mit der erfindungsgemäßen Schnellspanneinrichtung auf dem Werkzeugträger 30 montierbar ist.

Das zweite und dritte Ausführungsbeispiel zeigen, dass auf dem erfindungsgemäß ausgebildeten Werkzeugträger 30 sowohl erfindungsgemäß ausgebildete Werkzeughalter 32 unter Einsatz der erfindungsgemäßen Schnellspanneinrichtung als auch konventionell ausgebildete Werkzeughalter 232, 252 unter Einsatz einer konventionellen Verschraubung wahlweise montiert werden können.

## Patentansprüche

1. Werkzeugträger einer Werkzeugmaschine, umfassend einen Werkzeughalterträger (62) mit einer sich in den Werkzeughalterträger (62) hinein erstreckenden Aufnahme (64), in welche ein Fixierkörper (72) eines Werkzeughalters (32) durch Bewegen desselben in einer Einsteckrichtung (74) einsteckbar und in einem eingesteckten Zustand durch Fixierung desselben in der Aufnahme (64) durch ein Formschlusselement (118) festlegbar ist,
**dadurch gekennzeichnet , dass** das Formschlusselement ein Fixierkeilkörper (118) ist, der in dem Werkzeughalterträger (62) in einer quer zur Einsteckrichtung (74) verlaufenden Bewegungsrichtung (124) zwischen einer Freigabestellung und einer Fixierstellung bewegbar ist und dass der Fixierkeilkörper (118) in der Fixierstellung mit einer Keilaufnahme (112, 114) des Fixierkörpers (72) zusammenwirkt.

2. Werkzeugträger nach Anspruch 1, **dadurch gekennzeichnet, dass** der Fixierkeilkörper (118) in dem Werkzeughalterträger (62) linear bewegbar ist und mit einer Fixierkeilfläche (116) auf eine Keilfläche (114) der Keilaufnahme (112) des Fixierkörpers (72) wirkt.

3. Werkzeugträger nach einem der voranstehenden Ansprüche, **dadurch gekennzeichnet, dass** der Fixierkeilkörper (118) in einem Führungskanal (122) des Werkzeughalterträgers (62) bewegbar geführt ist.

4. Werkzeugträger nach einem der voranstehenden Ansprüche, **dadurch gekennzeichnet, dass** der Führungskanal (122) in die Aufnahme (64) quer zur Einsteckrichtung (74) eingreift.

5. Werkzeugträger nach einem der voranstehenden Ansprüche, **dadurch gekennzeichnet, dass** der Fixierkeilkörper (118) auf einer der Fixierkeilfläche (116) gegenüberliegenden Seite eine Abstützfläche (126) aufweist, mit welcher dieser zumindest in der Fixierstellung in dem Führungskanal (122) abgestützt geführt ist, und dass insbesondere der Fixierkeilkörper (118) in der Fixierstellung beiderseits der Aufnahme (64) in dem Führungskanal (122) mit seiner Abstützfläche (126) abgestützt ist.

6. Werkzeugträger nach einem der voranstehenden Ansprüche, **dadurch gekennzeichnet, dass** die Fixierkeilfläche (116) des Fixierkeilkörpers (118) in einer Ebene verläuft, die einen spitzen Winkel mit einer Führungsrichtung (124) des in dem Führungskanal (122) bewegbaren Fixierkeilkörpers (118) einschließt.

7. Werkzeugträger nach einem der voranstehenden Ansprüche, **dadurch gekennzeichnet, dass** der Fixierkeilkörper (118) durch eine Positioniereinheit (180) zwischen der Fixierstellung und der Freigabestellung bewegbar ist und mittels der Positioniereinheit (180) sowohl in der Fixierstellung als auch in der Freigabestellung positionierbar ist, und dass insbesondere die Positioniereinheit (180) auf einer einer werkstückzugewandten Frontseite (142) des Werkzeughalterträgers (62) abgewandten Seite am Werkzeughalterträger (62) angeordnet ist, und/oder dass insbesondere die Positioniereinheit (180) zum Bewegen des Fixierkeilkörper (118) zwischen der Fixierstellung und der Freigabestellung und zum Festlegen des Fixierkörpers (118) in der Fixierstellung manuell betätigbar ist, und/oder dass insbesondere die Positioniereinheit (180) eine Bajonettstruktur aufweist, mittels welcher der Fixierkeilkörper (118) sowohl in der Fixierstellung als auch der Freigabestellung positionierbar ist, dass insbesondere die Positioniereinheit (180) einen Flanschkörper (184) mit Bajonettflanschen (186) aufweist, die mit einer Bajonettkontur (188) einer Führungshülse (192) zusammenwirken, dass insbesondere die Bajonettkontur (188) zwei in einer Verschieberichtung (124) im Abstand voneinander und um eine zur Verschieberichtung (124) parallele Achse um einen Winkel verdreht zueinander angeordnete Stützflächen (194, 196) aufweist, und dass insbesondere der Flanschkörper (184) mit den Bajonettflanschen (186) mit einem Zentrierkörper (204) verbunden ist, welcher in der Führungshülse (192) in der Verschieberichtung (124) verschiebbar geführt ist.

8. Werkzeugträger nach einem der voranstehenden Ansprüche, **dadurch gekennzeichnet, dass** der Fixierkeilkörper (118) einstellbar mit der Positioniereinheit (180), insbesondere mit dem Zentrierkörper (204), gekoppelt ist, dass insbesondere der Zentrierkörper (204) mittels einer mit dem Zentrierkörper (204) verschraubten Einstellschraube (222) mit dem Fixierkeilkörper (118) gekoppelt ist.

9. Werkzeugträger nach einem der voranstehenden Ansprüche, **dadurch gekennzeichnet, dass** der Werkzeughalterträger (62) eine Auflageseite (66) aufweist, auf welcher der Werkzeughalter (32) auflegbar ist, und dass insbesondere der Werkzeughalterträger (62) an der Auflageseite (66) mit ersten Formschlusselementen (82) versehen ist, welche sich insbesondere quer zu einer Vorschubrichtung (X) des Werkzeughalterträgers (62) erstrecken.

10. Werkzeughalter (32) zur Fixierung an einem Werkzeugträger (30) insbesondere nach einem der voranstehenden Ansprüche, **dadurch gekennzeichnet, dass** der Werkzeughalter (32) einen Fixierkörper (72) aufweist, welcher in die Aufnahme (64) des Werkzeugträgers (30) einsetzbar ist.

11. Werkzeughalter nach Anspruch 10, **dadurch gekennzeichnet, dass** der Fixierkörper (72) als Keilaufnahme einen Durchbruch (112) aufweist, in welchem eine Keilfläche (114) vorgesehen ist, welche durch einen Fixierkeilkörper (118) des Werkzeugträgers (30) mit seiner Fixierkeilfläche (116) in der Fixierstellung beaufschlagt ist.

12. Werkzeughalter (32) nach Anspruch 10 oder 11, **dadurch gekennzeichnet, dass** dieser einen Abstützkörper (104) aufweist, welche mit einer Abstützseite (102) auf der Auflageseite (66) des Werkzeughalterträgers (62) auflegbar ist.

13. Werkzeughalter nach einem der Ansprüche 10 bis 12, **dadurch gekennzeichnet, dass** der Fixierkörper (72) sich ausgehend von der Abstützseite (102) des Abstützkörpers (104) vom Abstützkörper (104) weg erstreckt.

14. Werkzeughalter nach einem der Ansprüche 10 bis 13, **dadurch gekennzeichnet, dass** der Abstützkörper (104) an der Abstützseite (102) mit zweiten Formschlusselementen (92) versehen ist, welche mit ersten Formschlusselementen (82) des Werkzeughalterträgers (62) bei auf dem Werkzeughalterträger (62) fixiertem Werkzeughalter (32) in Eingriff stehen und dass insbesondere die zweiten Formschlusselemente (92) im Zusammenwirken mit den ersten Formschlusselementen (82) den Werkzeughalter (32) relativ zum Werkzeughalterträger (62) in einer Vorschubrichtung (X) des Werkzeugträgers (30) exakt positionieren.

15. Werkzeughalter nach einem der Ansprüche 10 bis 14, **dadurch gekennzeichnet, dass** der Fixierkörper (72) in Richtung quer zu einer Bewegungsrichtung (124) des Fixierkeilkörpers (118) eine größere Ausdehnung aufweist als in der Bewegungsrichtung (124).
